# EUROPÄISCHE PATENTANMELDUNG

(11) **EP 1 734 343 A2**
(43) Veröffentlichungstag der Anmeldung: **20.12.2006**
(21) Anmeldenummer: 06010408.0
(22) Anmeldetag: 19.05.2006
(51) Int. Cl.: G01D 5/14

(54) **Bewegungssensor**

(30) Priorität: 17.06.2005 DE 102005028235
(71) Anmelder: Beru AG, 71636 Ludwigsburg (DE)
(72) Erfinder: Berdel, Erich, 71579 Asperg (DE); Marto, Arno, 71263 Weil der Stadt (DE); Wagner, Klaus, 71723 Grossbottwar (DE); Weissenbacher, Johann, 74182 Obersulm/Sülzbach (DE); Bantzhaff, Ralf, 71691 Freiberg (DE); Hartmann, Robert, 72710 Reutlingen (DE)
(74) Vertreter: Pohlmann, Eckart

(57) **Zusammenfassung**

Bewegungssensor zum Erfassen von linearen und/oder Drehbewegungen eines Gegenstandes mit einem Dauermagneten (1) zum Anbringen an dem Gegenstand, dessen Bewegung zu erfassen ist und einem Hall-IC (2) zum Erfassen des Magnetfeldes des Dauermagneten (1). Der Spalt (6) zwischen dem Dauermagneten (1) und dem Hall-IC (2) ist über den Bereich (3) der zu erfassenden Bewegungen des Gegenstandes so veränderlich gestaltet ist, dass das Ausgangssignal des Hall-IC (2) linearisiert ist.

## Beschreibung

Die Erfindung betrifft einen Bewegungssensor zum Erfassen von linearen Bewegungen und/oder Drehbewegungen eines Gegenstandes mit einem Dauermagneten zum Anbringen an dem Gegenstand, dessen Bewegung zu erfassen ist, und einem Hall-IC zum Erfassen des Magnetfeldes des Dauermagneten.

Ein derartiger Bewegungssensor ist aus der DE 39 38 057 A1 bekannt und dient dazu, die Umdrehungen einer Welle zu erfassen, an der der Dauermagnet befestigt wird.

Bewegungssensoren der oben beschriebenen Art werden auf dem Gebiet der Weg- und Winkelmesstechnik eingesetzt und sind berührungslos arbeitende Sensoren, die lineare Wegstrecken oder Drehbewegungen mit Hilfe eines Dauermagneten erfassen. Beispiele für Wegsensoren sind die sog. "PLCD" (Permament Magnetic Linear Contactless Displacement) Sensoren, die auf dem Gebiet der Kraftfahrzeugtechnik als Neigungs-, Pedal- und Kupplungsgeber, Kupplungsnehmer, oder für die Handbremshebelmessung eingesetzt werden.

Derartige PLCD-Sensoren weisen ein sensitives Element aus mehreren Spulen und einem Kern auf und sind mit einer zusätzlichen aufwändigen und mit hohen Kosten verbundenen Auswerteelektronik mit Frequenzerzeugung und Auswertung der Frequenzveränderung über eine Induktivitätsänderung versehen. Derartige Sensoren benötigen zur Erzeugung des Ausgangssignals eine aufwändige Steuer- und Auswertetechnik, wobei Primärspulen und Auswertespulen notwendig sind. Der Aufbau ist daher kompliziert und mit hohen Kosten verbunden.

Bei PLCD-Sensoren wird darüber hinaus eine Induktionsänderung über die Beziehung L = B*A/I ermittelt. Bei derartigen Sensoren tritt eine Sättigung dort auf, wo sich der Dauermagnet befindet und die höchsten Magnetflüsse auftreten. Dieser Sättigungseffekt ist zur Sensierung notwendig, bedingt jedoch auch, dass der lineare Induktionshub ΔB gering ist.

Da weiterhin bei derartigen Sensoren der äußere Umriss durch das Sensorgehäuse, Leitbleche und den Hall-IC bestimmt wird, ist dieser Umriss in der Summe etwas größer als der Weg des bewegten Dauermagneten, so dass sich das Verhältnis Messbereich/Sensorgehäuselänge nicht 1:1 gestalten lässt und somit keine 1:1 Abbildung möglich ist.

Schließlich ist bei Winkelsensoren der eingangs genannten Art mit einem Dauermagneten und einem Hall-IC ein üblicher Messbereich von ϕ = 90° bis 120° mit linearem Ausgangssignal gegeben, der als relativ gering anzusehen ist.

Die der Erfindung zugrunde liegende Aufgabe besteht daher darin, einen Bewegungssensor der eingangs genannten Art zu schaffen, der einen weniger komplizierten Aufbau hat und ohne aufwändige Steuer- und Auswertetechnik auskommt.

Diese Aufgabe wird gemäß der Erfindung durch den Bewegungssensor gelöst, der im Anspruch 1 angegeben ist.

Bei dem erfindungsgemäßen Bewegungssensor wird das Ausgangssignal durch die Formgebung des magnetisch wirksamen Elementes, d.h., über die entsprechende Gestaltung des Spaltes zwischen dem Dauermagneten und dem Hall-IC linearisiert. Das führt dazu, dass sich bei einer Ausbildung als Wegsensor ein Verhältnis des Messbereiches zur Sensorgehäuselänge von 1:1 erreichen lässt und sich bei einer Ausbildung als Drehbewegungssensor für die Winkelmessung der Messbereich vergrößern lässt, derart, dass bei einer entsprechenden Magnetgeometrie der Messwinkel ϕ = 220° bei linearem Ausgangssignal beträgt.

Weiterhin wird bei dem erfindungsgemäßen Bewegungssensor eine Sättigung nicht angestrebt, so dass der Wert von B deutlich höher liegt. Durch eine entsprechende Anpassung des magnetischen Gesamtwiderstandes über den Messweg wird eine analoge, konstante Änderung in B bewirkt, und zwar vor allem durch eine stetige Erhöhung des magnetischen Widerstandes in der Luft. Dadurch ergibt sich ein höherer linearer Induktionshub ΔB.

Besonders bevorzugte Ausgestaltungen und Weiterbildungen des erfindungsgemäßen Bewegungssensors sind Gegenstand der Ansprüche 2 bis 8.

Der Grundgedanke der erfindungsgemäßen Ausbildung besteht somit darin, durch eine entsprechende geometrische Formgebung des Dauermagneten oder des Flussleistblechs den Spalt zwischen dem Dauermagneten und dem Hall-IC über die zu messende Wegstrecke oder über den zu messenden Drehwinkel so veränderlich zu gestalten, dass die Nichtlinearität des Feldlinienverlaufs kompensiert wird und daher das Ausgangssignal des Hall-ICs linear ist.

Im Folgenden werden anhand der zugehörigen Zeichnungen besonders bevorzugte Ausführungsbeispiele der Erfindung näher beschrieben. Es zeigen
Fig. 1A und 1B ein erstes Ausführungsbeispiel des erfindungsgemäßen Bewegungssensors zum Erfassen von Drehbewegungen und
Fig. 2 in einer schematischen Draufsicht und perspektivischen Ansicht ein zweites Ausführungsbeispiel des erfindungsgemäßen Bewegungssensors zum Erfassen von linearen Bewegungen eines Gegenstandes.

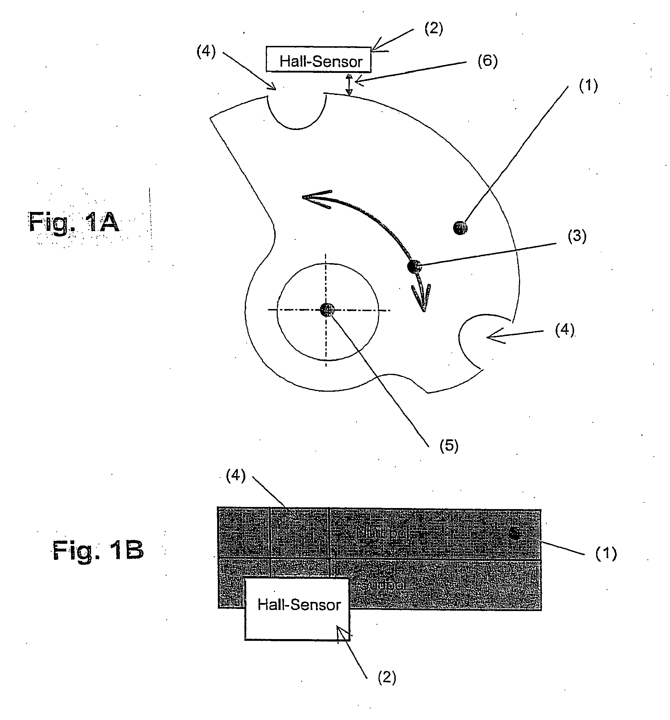

Das in Fig. 1A und 1B dargestellte erste Ausführungsbeispiel des erfindungsgemäßen Bewegungssensors umfasst einen analog messenden Hallsensor 2 und einen Magneten 1 in Form eines Kunststoff gebundenen Magneten oder eines Magneten in gesinterter Herstellung.

Der Magnet 1 ist ein Dauermagnet, der um eine Achse 5 drehbar ist, wobei der Luftspalt 6 zwischen dem Hallsensor 2 und dem Außenumriss des Magneten 1 der Messgröße entspricht und zur Linearisierung des Ausgangssignals des Hallsensors entsprechend variiert. Wenn mit Y der quadratische Anteil bezeichnet wird, der sich in der parabelförmigen Abbildung des Umrisses des Magneten 1 widerspiegelt und X den Winkelbereich bezeichnet, ist Y = mX² + b.

Die Außenkontur oder der Umriss des Magneten ist vorzugsweise eine Spirale und zwar eine Fermatsche Spirale R²=a²*Φ unter Berücksichtigung der Tatsache, dass zwischen der Breite des Luftspaltes und dem magnetischen Fluss ein quadratischer Zusammenhang besteht. Bei einer derartigen Fermatschen Spirale ist der Windungsabstand nicht konstant und liegen die Windungen mit größerer Entfernung vom Zentrum immer dichter beieinander.

Wie es in Fig. 1A weiterhin dargestellt ist, umfasst die variierende Kurvenform 4 des Außenumrisses, die zur Linearisierung des Ausgangssignals frei wählbar ist, lokal begrenzte sprungartige Vertiefungen, über die ein Schaltverhalten erzielt werden kann, da das Ausgangssignal dort sprungartig variiert. Statt der Vertiefungen können auch entsprechende Erhöhungen vorgesehen sein.

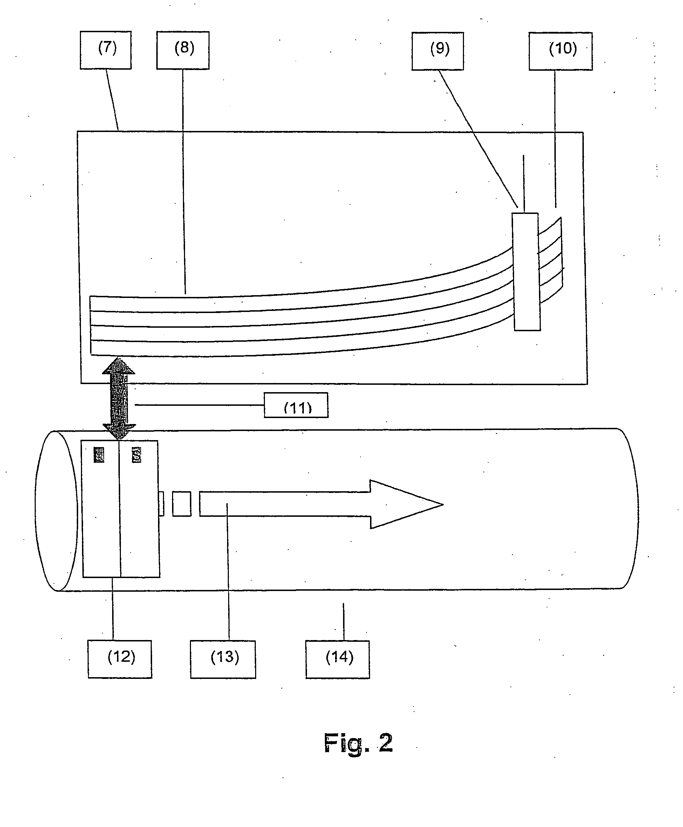

Das in Fig. 2 dargestellte Ausführungsbeispiel des erfindungsgemäßen Bewegungssensors umfasst ein Sensorgehäuse 7, an dem wenigstens ein Flussleitblech 8 angebracht ist, einen Hall-IC 9 sowie ein Zusatzblech 10.

Ein Kolben 12 mit Ringmagnet ist mit einem Luftspalt 11 gegenüber dem Flussleitblech 8 des Sensorgehäuses angeordnet. Der Kolben 12 bewegt sich dem daran angebrachten Ringmagneten in Richtung des Pfeils 13. Mit 14 ist ein Zylindergehäuse bezeichnet.

Bei diesem Ausführungsbeispiel ist durch eine entsprechende Gestaltung, d.h., Konturierung des Flussleitblechs 8 dafür gesorgt, dass sich in Bewegungsrichtung des Kolbens 12 der Luftspalt ändert. Hierdurch wird eine Linearisierung des Ausgangssignals des Hall-ICs 9 über die zu erfassende Bewegungsstrecke des Kolbens 12 erzielt, der sich linear in Richtung des Pfeils 13 bewegt.

Bei dem in Fig. 2 dargestellten Ausführungsbeispiel wird der Neigungswinkel des Leitblechs 8 nach Ringmagnetstärke, nach Anfangsabstand zum Ringmagneten und nach Länge und magnetischer Leitfähigkeit so angepasst, dass eine ständige Erhöhung des magnetischen Widerstandes in der Luft erreicht wird. Hierbei sollte darauf geachtet werden, dass das Leitblech 8 nicht voll in die Sättigung gehen kann.

Als Materialien für den Ringmagneten eigen sich insbesondere Seltenerdmaterialien.

Bei dem in Fig. 1A und 1B dargestellten Bewegungssensor, der als Winkelsensor ausgebildet ist, ist dem Dauermagneten 1 eine Art Nierenform gegeben, derart, dass der Luftspalt stetig mit dem Messwinkel 3 variiert. Der Anfangsabstand ist von der Stärke des Magneten 1 abhängig, die Kurvenform 4 des Umrisses bewirkt die Linearität des Ausgangssignals, wobei diese näherungsweise parabelförmig ist. In dieser Weise wird eine ständige Erhöhung des magnetischen Widerstandes in der Luft erzielt.

Als Materialien für den Magneten 1 bieten sich kunststoffgebundener Ferrit oder andere spritzfähige Magnetmaterialien an.

Bei dem in Fig. 2 dargestellten Ausführungsbeispiel, bei dem es sich um einen Sensor für eine lineare Wegstrecke handelt, kann das oder können die Flussleitbleche 8 als Polynom höheren Grades ausgebildet werden, wobei jedoch bei Verwendung eines programmierbaren Hall-ICs auf eine polynomische Form verzichtet werden kann. Bei einem programmierbaren Hall-IC ist lediglich ein ebenes Flussblech mit einer Schräge von 5 % vorzusehen, da die restlichen Fehler über die Programmierbarkeit des Hall-ICs ausgeglichen werden können.

Bei der Verwendung eines nicht programmierbaren Hall-ICs ist jedoch eine polynomische Form erforderlich.

Das Flussleitblech oder die Flussleitbleche 8 können als ein- oder mehrschichtige Bleche ausgebildet und mit oder ohne Zusatzblech 10 gestaltet sein.

Das in Fig. 2 dargestellte Ausführungsbeispiel eignet sich zur Verwendung bei beliebigen Kolben und Zylindern, wobei die Zylinder aus nicht ferromagnetischem Material bestehen, der Kolben jedoch eventuell ferromagnetisch ausgebildet sein kann. Der Ringmagnet ist auf dem Kolben montiert. Derartige Bewegungssensoren dienen zur Anwendung in der Hydraulik, bei Stoßdämpfern und verschiedenen anderem mehr.

Das Grundfunktionsprinzip des erfindungsgemäßen Bewegungssensors, sei es in seiner Ausgestaltung als Winkelsensor, sei es in seiner Ausgestaltung als Wegsensor besteht darin, dass sich bei einer Entfernung eines Magneten von einem Hall-Sensor das Induktionsfeld quadratisch mit dem Luftspalt verändert, was die nicht gewünschte Linearität darstellt. Bei der erfindungsgemäßen Ausgestaltung wird durch eine gezielte Änderung des Luftspaltes zwischen dem Hall-IC und dem Magneten bei einem Winkelsensor bzw. dem Leitblech bei einem Wegsensor eine Linearisierung des Ausgangssignals des Hall-IC erzielt.

Die große Winkelstrecke bei der Winkelmessung kann deswegen erzielt werden, weil ein großer Teil eines Vollkreises ausgenutzt werden kann.

Untersuchungen haben ergeben, dass bei dem erfindungsgemä-ßen Bewegungssensor die Linearisierung des Ausgangssignals des Hall-IC in starkem Maße erreicht wird, die Abweichungen zur Idealkurve sind außerordentlich gering.

## Patentansprüche

1. Bewegungssensor zum Erfassen von linearen Bewegungen und/oder Drehbewegungen eines Gegenstandes mit
- einem Dauermagneten zum Anbringen an dem Gegenstand, dessen Bewegung zu erfassen ist, und
- einem Hall-IC zum Erfassen des Magnetfeldes des Dauermagneten,
**dadurch gekennzeichnet, dass**
der Spalt zwischen dem Dauermagneten und dem Hall-IC über den Bereich der zu erfassenden Bewegung des Gegenstandes so veränderlich gestaltet ist, dass das Ausgangssignal des Hall-IC linearisiert ist.

2. Bewegungssensor nach Anspruch 1, **dadurch gekennzeichnet, dass** zum Erfassen von Drehbewegungen eines Gegenstandes die Umrissfläche des Dauermagneten, die dem Hall-IC zugewandt ist, konturiert ist.

3. Bewegungssensor nach Anspruch 1, **dadurch gekennzeichnet, dass** die Kontur der Umrissfläche des Dauermagneten parabelartig ist.

4. Bewegungssensor nach Anspruch 2, **dadurch gekennzeichnet, dass** in der Umrissfläche des Dauermagneten stellenweise sprungartige Erhöhungen oder Vertiefungen vorgesehen sind.

5. Bewegungssensor nach Anspruch 1, **dadurch gekennzeichnet, dass** zum Erfassen von linearen Bewegungen der Hall-IC mit wenigstens einem Flussleitblech versehen ist, das gegenüber der Bewegungsbahn des Dauermagneten konturiert ist.

6. Bewegungssensor nach Anspruch 5, **dadurch gekennzeichnet, dass** das Flussleitblech gegenüber der Bewegungsbahn des Dauermagneten schräg verläuft.

7. Bewegungssensor nach Anspruch 6, **dadurch gekennzeichnet, dass** der Schrägwinkel des Flussleitbleches etwa 5° beträgt.

8. Bewegungssensor nach Anspruch 5, **dadurch gekennzeichnet, dass** die Kontur des Flussleitbleches polygonartig ist.
